# FASCICULE DE BREVET EUROPEEN

(11) **EP 3 727 825 B1**
(45) Date de publication et mention de la délivrance du brevet: **20.10.2021**
(21) Numéro de dépôt: 18822036.2
(22) Date de dépôt: 12.12.2018
(51) Int. Cl.: B29D 30/30, B29D 30/46

(54) **PROCÉDÉ DE POSE D'UNE NAPPE DE RENFORT SUR UN TAMBOUR DE GRANDE DIMENSION**
VERFAHREN ZUM AUFBRINGEN EINER VERSTÄRKUNGSLAGE AUF EINE GROSS DIMENSIONIERTE TROMMEL
METHOD FOR PLACING A REINFORCING PLY ON A LARGE DIMENSION DRUM

(30) Priorité: 19.12.2017 FR 1762403
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: BARJON, Stéphane, 63040 CLERMONT-FERRAND CEDEX 9 (FR); GAYTON, Michel, 63040 CLERMONT-FERRAND CEDEX 9 (FR)
(74) Mandataire: Redouté, Gilles Pierre
(86) Numéro de dépôt international: PCT/EP2018/084600
(87) Numéro de publication internationale: WO 2019/121254

(56) Documents cités:
- EP-A1- 0 537 348
- EP-A2- 0 125 882
- WO-A1-2012/139556
- DE-B- 1 144 912
- JP-A- 2017 217 739
- NL-C2- 1 025 764

## Description

L'invention concerne un procédé de réalisation d'un pneumatique comprenant une étape au cours de laquelle on dépose par enroulement une nappe de renfort sur une forme cylindrique.

Ce procédé s'intéresse au cas des pneumatiques de grande dimension tels que les pneumatiques de génie civil, dont le diamètre au seat peut aller jusqu'à 63 pouces et dont la masse peut s'élever à plusieurs tonnes.

La réalisation de ces pneumatiques nécessite la mise en œuvre de composants en caoutchouc adaptés au développement de ces pneumatiques et dont la masse excède largement les capacités de manutention courantes des opérateurs en charge de ces opérations. Aussi, dans la mesure du possible, il est fait appel à des moyens aptes à soulager ces efforts de manutention.

Le procédé selon l'invention concerne plus particulièrement la pose des nappes de renforts destinées à consolider le sommet du pneumatique. Ces nappes sont formées de tronçons de fils enrobés dans un mélange de caoutchouc, parallèles entre eux et faisant un angle donné avec la direction longitudinale de la nappe. Ces fils sont en règle générale des fils métalliques formés eux-mêmes de l'assemblage de plusieurs couches de fils enroulées sur elles-mêmes.

Les nappes de renfort sont prélevées depuis une bande continue et sont posées sur une surface de réception telle qu'une forme sensiblement cylindrique formée de secteurs mobiles radialement ou directement sur le sommet de l'enveloppe après une étape dite de conformation au cours de laquelle on confère à l'ébauche de pneumatique sa forme torique (voir par exemple les documents DE 11 44 912 B et EP 0 125 882 A2).

On observe toutefois que, dans ces deux cas, il est très difficile de maitriser le diamètre, et donc la circonférence de la surface de réception de la nappe de renfort. Il est donc impossible de réaliser une coupe à longueur de la nappe en amont du dispositif d'assemblage du sommet.

Le procédé selon l'invention, utilisant des éléments de dispositifs adaptés, a pour objet d'apporter une solution aux problèmes posés ci-dessus.

Ce procédé prévoit de mettre en œuvre les étapes suivantes au cours desquelles :
- Etape A : on fait adhérer un front avant de la nappe de renfort sur la forme cylindrique et, en faisant tourner la forme cylindrique selon une première direction circonférentielle, on dépose la nappe sur la forme cylindrique jusqu'à ce que le front avant réalise un tour complet,
- Etape B : on repère sur la nappe un point de pénétration sur une ligne de coupe pour former un front arrière destiné à être mis en joint avec le front avant,
- Etape C : on fait pénétrer une lame de coupe équipant une tête de coupe pilotée en translation selon un axe transversal, entre deux fils placés sur la ligne de coupe au niveau dudit point de pénétration et définissant un entrefil,
- Etape D : on fait tourner la forme cylindrique selon une seconde direction circonférentielle, opposée à la première direction circonférentielle, en déplaçant la tête de coupe selon une première direction transversale jusqu'à ce que la lame de coupe soit disposée à une distance prédéterminée et non nulle d'une première lisière et, sans ressortir la lame de coupe de l'entrefil,
- Etape E : on fait tourner la forme cylindrique selon la première direction circonférentielle, en déplaçant la tête de coupe selon une seconde direction transversale, opposée à la première direction transversale jusqu'à ce que la lame de coupe débouche au niveau d'une seconde lisière,
- Etape F : on fait tourner la forme cylindrique selon la seconde direction circonférentielle et on fait adhérer le front arrière sur la forme cylindrique en mettant bout à bout le front arrière et le front avant,
- Etape G :, on détache le front arrière de la nappe au niveau de la première lisière et on achève la mise en joint du front arrière et du front avant.

Il résulte de ce mode opératoire que la coupe de la nappe pour dégager le front arrière avant sa mise en joint avec le front avant se fait directement sur la forme cylindrique. L'ajustement de la longueur de la nappe, de sorte que le front avant et le front arrière puissent se joindre, résulte alors de la précision avec laquelle on détermine la position du point de pénétration.

On observe également que la coupe à longueur de la nappe peut se faire sans qu'il soit nécessaire d'extraire la lame de coupe de l'entrefil défini par l'espace compris entre les deux fils formant les lisières du front arrière de la nappe en cours de pose et le front avant du reste de la bande continue. Cette caractéristique du procédé permet de s'affranchir du besoin de réinsérer la lame entre les deux fils et qui est difficile à réaliser à l'aide de moyens automatisés. Elle autorise également la possibilité, comme on le verra par la suite, de réaliser la plupart des opérations de coupe à l'aide de moyens motorisés pilotables par une unité de commande centralisée permettant de soulager et de réduire au juste nécessaire les interventions manuelles de l'opérateur.

En particulier, ce procédé permet de réaliser des coupes le long de lisières de grande longueur pouvant atteindre jusqu'à 5m. Il permet enfin de réduire les efforts imposés à l'opérateur pour décoller la nappe et ajuster la mise en joint de la lisière avant et de la lisière arrière.

Le procédé selon l'invention peut aussi comprendre isolément, ou en combinaison, l'exécution des actions suivantes :
- Au cours de l'étape B, un opérateur détermine le point de pénétration et y appose une marque visible.
- Au cours de l'étape C, à l'aide d'une caméra disposée sur la tête de coupe on détecte la marque disposée sur le point de pénétration, et on pilote la rotation de la forme cylindrique et le déplacement transversal de la tête de coupe pour amener ladite lame de coupe au droit dudit point de pénétration.
- Au cours de l'étape B, on détecte le front avant à l'aide d'un dispositif de détection de front sensible à la variation de hauteur engendrée sur la forme cylindrique par le passage dudit front avant au droit dudit dispositif de détection de front, et on amène la forme cylindrique et la lame de coupe à des positions angulaires et transversales prédéterminées de sorte que, au cours de l'étape C, la lame de coupe pénètre entre deux fils au niveau du point de pénétration situé sur la ligne de coupe.
- On aligne la position transversale de la lame de coupe sur la position du dispositif de détection de front.
- Le dispositif de détection de front est disposé transversalement à équidistance de la première et de la seconde lisière.
- Au cours des étapes D et E, on régule le déplacement transversal de la tête de coupe en fonction du déplacement longitudinal du tapis de pose et de l'angle formé par les fils avec la direction longitudinale.
- La lame de coupe est mobile librement selon une direction transversale par rapport à la tête de coupe.
- A l'aide d'un moyen d'évaluation de la position transversale de la lame de coupe par rapport à la tête de coupe, on ajuste le déplacement transversal de la tête de coupe de sorte que la position transversale de la lame de coupe par rapport à la tête de coupe reste dans des limites prédéterminées.
- Au cours des étapes A, D, E et F, on fait circuler la nappe successivement sur un tapis de centrage puis sur un tapis de pose disposés en amont de la forme cylindrique.
- Le tapis de centrage est mobile en rotation autour d'un axe perpendiculaire au plan du tapis de centrage sur lequel circule la nappe et, à l'aide de caméras détectant la position des lisières de la nappe, on régule la position angulaire du tapis de centrage de manière à aligner la nappe sur une position transversale prédéfinie.
- Les fils de la nappe sont des fils métalliques, et le tapis de centrage et le tapis de pose sont munis d'un dispositif magnétique pour faire adhérer la nappe sur lesdits tapis.
- Les plans du tapis de pose et du tapis de centrage sur lesquels circule la nappe font entre eux un angle non nul.
- Une force motrice fournie à la nappe par le tapis de centrage est inférieure ou égale à la moitié d'une force motrice fournie à la nappe par le tapis de pose.
- On ajuste la vitesse longitudinale du tapis de pose et du tapis de centrage, par rapport à la vitesse de rotation de la forme cylindrique de sorte que la tension de pose de la nappe sur la forme cylindrique est égale à une valeur prédéterminée.
- A l'étape G, on détache le front arrière de la nappe à l'aide d'un outillage manuel.
- La forme cylindrique est formée de secteurs mobiles radialement.
- La forme cylindrique est le sommet d'une ébauche torique de pneumatique.

L'invention sera mieux comprise à la lecture de la description qui suit et des figures annexées, qui sont fournies à titre d'exemples et ne présentent aucun caractère limitatif, dans lesquelles :
- La figure 1 représente une vue schématique en perspective d'une machine d'assemblage pour la réalisation du sommet d'un pneumatique de génie civil.
- La figure 2 représente une vue de dessus schématique d'une nappe de renfort.
- La figure 3 représente une vue de dessus schématique du dispositif de centrage et de pose.
- Les figures 4, 5 et 6 représentent des vues de profil schématiques simplifiées du tapis de pose et du tapis de centrage au cours de la mise en œuvre du procédé.
- La figure 7 représente une vue de profil schématique du dispositif de régulation de tension.
- La figure 8 représente une vue en perspective schématique de la tête de coupe.
- La figure 9 représente une vue de face schématique de la pointe de la lame de coupe.
- La figure 10 représente une vue de face schématique de la nappe au cours de l'étape B.
- La figure 11 représente une vue de face schématique de la nappe au cours de l'étape D ou de l'étape E.
- Les figures 12 et 13, représentent des vues de profil schématiques du dispositif de détection de front avant.

Dans ce qui suit on utilisera les repères dans lesquels la direction longitudinale XX' correspond à la direction de circulation de la nappe et à la direction circonférentielle de pose. La direction YY' correspond à la direction transversale de la nappe et à la direction axiale de la forme cylindrique. Enfin, la direction ZZ' correspond à une direction perpendiculaire au plan de la nappe confondue lorsque la nappe est enroulée sur la forme cylindrique à la direction radiale de ladite forme cylindrique.

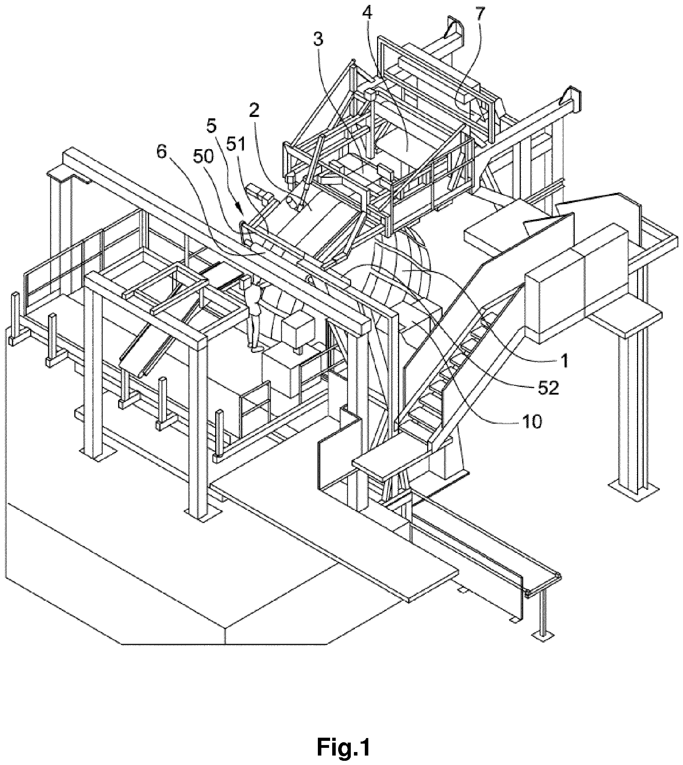

La machine de fabrication illustrée à la figure 1 permet de localiser les principaux organes utiles à la mise en œuvre du procédé.

La forme cylindrique 1, formée de secteurs distribués circonférentiellement et mobiles radialement, est mise en rotation autour de son axe par un moteur 10. Un codeur (non représenté) permet de connaitre à tout moment la position angulaire de la forme cylindrique ainsi que la vitesse de rotation de la forme cylindrique 1.

Un dérouleur motorisé 7 est disposé en amont de l'installation pour fournir à la demande la longueur de bande nécessaire pour prélever une nappe de renfort P destinée à former le sommet de l'enveloppe de pneumatique.

Un premier tapis d'alimentation 4 dirige la bande vers l'aval de la machine. Ce tapis d'alimentation 4 peut être un tapis d'entrainement motorisé ou encore une table à bille autorisant un déplacement latéral de la bande. Des moyens de pré centrage mécanique, tels que des guides réglables, permettent alors de placer latéralement la bande dans un premier jeu de tolérances.

Un tapis de centrage 3 est disposé en aval du tapis d'alimentation 4, et en amont d'un tapis de pose 2. Préférentiellement, le tapis de centrage 3 et le tapis de pose 4 sont dotés d'un système magnétique, connu en soi, permettant de faire adhérer la nappe et de la maintenir en position tout au long du processus de transfert de la nappe sur les tapis 2 et 3.

Optionnellement, des bras de transferts ou des tapis magnétiques peuvent être placés entre les tapis pour assurer le passage de la pointe de la nappe d'un tapis à un autre.

Le dispositif de déroulage ou d'enroulage 7, le tapis d'alimentation 4, le tapis de centrage 3 et le tapis de pose 2 sont pilotés par une unité de commande centralisée qui actionne les moyens d'entrainement des tapis pour faire avancer ou reculer la nappe à une vitesse longitudinale synchronisée avec la vitesse angulaire de la forme cylindrique 1.

Lorsque la forme cylindrique 1 est mise en rotation selon la première direction, le tapis de pose 2, le tapis de centrage 3, le tapis d'alimentation 4 et le dispositif de déroulage 7 sont actionnés selon une première direction longitudinale correspondant au déroulage et à l'alimentation d'une bande continue. Lorsque la forme cylindrique 1 est mise en rotation selon la seconde direction circonférentielle ces organes fonctionnent selon une seconde direction longitudinale de sens opposé à la première direction longitudinale et le dispositif 7 est alors configuré pour rembobiner la bande.

Un dispositif de coupe 5 également piloté par l'unité de commande centralisée est disposé en aval du tapis de pose 2, entre un rouleau de régulation de tension 6 et la sortie du tapis de pose. Le dispositif de coupe 5 comprend une tête de coupe 51 circulant sur un rail 50 disposé transversalement. Un réflecteur 52 est placé en arrière de la nappe.

Le rouleau de régulation de tension 6 est disposé en aval du dispositif de coupe 5 à proximité du point de contact entre la nappe et la forme cylindrique 1.

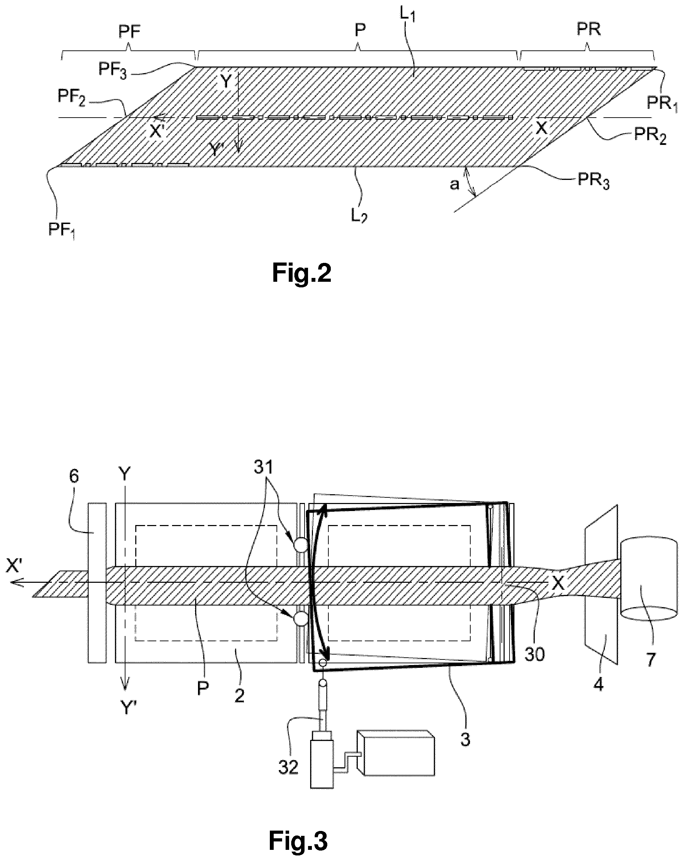

La figure 2 représente une nappe de renfort P, une fois détachée de la bande continue, dans laquelle on distingue une première lisière L₁ et une seconde lisière L₂. Ces lisières latérales sont parallèles entre elles et sont distantes l'une de l'autre, dans le cas d'une nappe destinée à un pneu génie civil, d'une largeur variant de 150 millimètres à plus d'un mètre.

La nappe de renfort a une épaisseur pouvant varier de 3mm à 10mm. Les fils composant la nappe de renfort ont un diamètre allant de 1mm à 6mm et le pas entre les fils varie, selon le type de nappe, de 2mm à 7mm.

Le front avant PF comprend une pointe avant PF₁ un talon avant PF3 et un centre avant PF2 situé sur l'intersection de la ligne équidistante des deux lisières L₁ et L2 avec la ligne formant le front avant. De manière analogue, le front arrière PR comprend une pointe arrière PR₁, un talon arrière PR₃ et un centre arrière PR₂.

Les fils de la nappe font un angle a donné avec la direction longitudinale XX' compris entre 0° et 60°.

Les valeurs de largeur et d'angle indiquées ci-dessus conduisent à l'obtention d'un front de nappe dont la longueur varie de 300 mm à plus de 5m.

Ces données chiffrées permettent aussi de mieux évaluer les longueurs et les masses mises en jeu, ainsi que l'intérêt de faciliter la réalisation de la coupe et de la pose de la nappe.

La figure 3 illustre le fonctionnement du dispositif de centrage dynamique. Le tapis de centrage 3 représenté à la figure 3 est monté en rotation autour d'un axe 30 perpendiculaire au plan du tapis de centrage 3. Un vérin d'actionnement 32 permet de piloter la position angulaire du tapis de centrage par rapport à la direction longitudinale XX'. Des caméras 31 disposées de part et d'autre de la nappe entre le tapis de centrage 3 et le tapis de pose 2, détectent la position des lisières L₁ et L₂ par rapport à un axe de centrage. Cet axe de centrage peut être aligné sur une ligne équatoriale de la forme cylindrique ou décalé latéralement selon le type de nappe à poser.

L'information concernant le positionnement des lisières obtenue par les caméras 31 est transmise à l'unité de commande centralisée qui commande la position du vérin 32 pour modifier la position latérale de la nappe de sorte que la nappe pénètre sur le tapis de pose 2 en étant parfaitement alignée sur l'axe de centrage.

Lorsque seul le front avant ou le front arrière de la nappe reposent sur le tapis de centrage on choisira d'aligner la nappe par rapport à la seule position de la lisière formant la partie latérale dudit front.

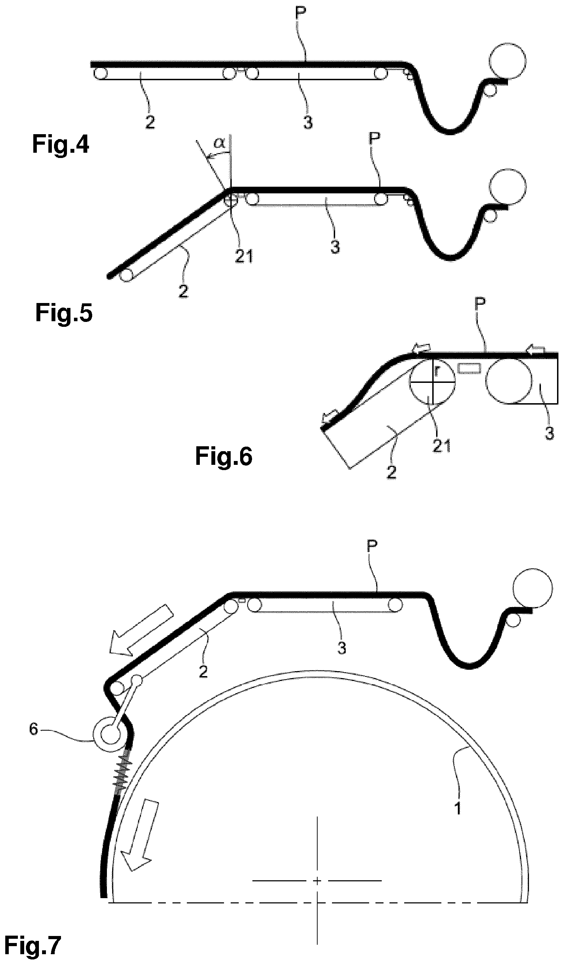

Les figures 4, 5 et 6 illustrent une particularité de mise en œuvre du procédé de déroulage liée à la forte épaisseur de la nappe.

Lorsque le tapis de centrage 3 et le tapis de pose 2 sont disposés sur un même plan la fibre neutre de la nappe circule à la même vitesse que la face de la nappe P en contact avec la surface des tapis, comme cela est illustré à la figure 4.

Lorsque, au moment de la pose de la nappe, on abaisse le tapis de pose 2 en direction de la forme cylindrique 1, le plan du tapis de pose 2 fait un angle α non nul avec le plan du tapis de centrage 3. La nappe circule alors sur la partie cylindrique du rouleau d'entrainement 21 disposée du côté amont du tapis de pose.

Il résulte de ces positionnements respectifs qu'au niveau de ladite partie cylindrique, la vitesse circonférentielle de la nappe dépend de la distance au centre de rotation du rouleau 21. La partie de la nappe en contact avec la partie cylindrique aura une vitesse de déplacement circonférentielle égale au produit de la vitesse angulaire du rouleau 21 par le rayon r. En revanche la vitesse circonférentielle de la fibre neutre de la nappe sera égale au produit de la vitesse angulaire du rouleau 21 par le rayon r augmenté de la demi épaisseur de la nappe P. Lorsque la nappe a une forte épaisseur, on observe la formation d'un décollement de la nappe à l'entrée du tapis de pose comme cela est illustré à la figure 6.

Pour réduire ce phénomène gênant, il est proposé de créer un léger glissement entre les deux tapis, en augmentant la force motrice du tapis de pose 2 par rapport à la force motrice du tapis de centrage 3. En pratique, on ajuste la force motrice fournie par le tapis de centrage 3 pour faire avancer la nappe de sorte qu'elle soit inférieure ou égale à la moitié de la force motrice pour faire avancer la nappe fournie par le tapis de pose 2.

La figure 7 illustre le fonctionnement du dispositif de régulation de tension comprenant un rouleau dynamométrique 6 autour duquel la nappe de renfort circule lorsque le tapis de pose 2 est en position basse. Après étalonnage, la force radiale exercée par la nappe sur le rouleau 6 permet d'estimer la tension de pose.

Un dispositif de régulation, relié à l'unité de commande centralisée, agit alors sur la vitesse des tapis 2, 3 et 4 pour maintenir la tension de pose à une valeur prédéterminée.

Une première boucle de régulation « en aveugle » permet de synchroniser la vitesse des tapis sur la vitesse angulaire de la forme cylindrique. Toutefois, comme cela a été évoqué ci-dessus la vitesse tangentielle au niveau du point de contact entre la nappe et la surface de la forme cylindrique peut connaitre des variations sensibles liées à la non maitrise du diamètre de la forme cylindrique, et à la présence des profilés posés précédemment.

La régulation de la tension autour d'une valeur de consigne pouvant varier entre 100N et 300N se superpose à la première boucle de régulation et permet de s'affranchir de ces incertitudes. Le dispositif de régulation de tension peut être activé quelle que soit la direction circonférentielle imposée à la forme cylindrique 1.

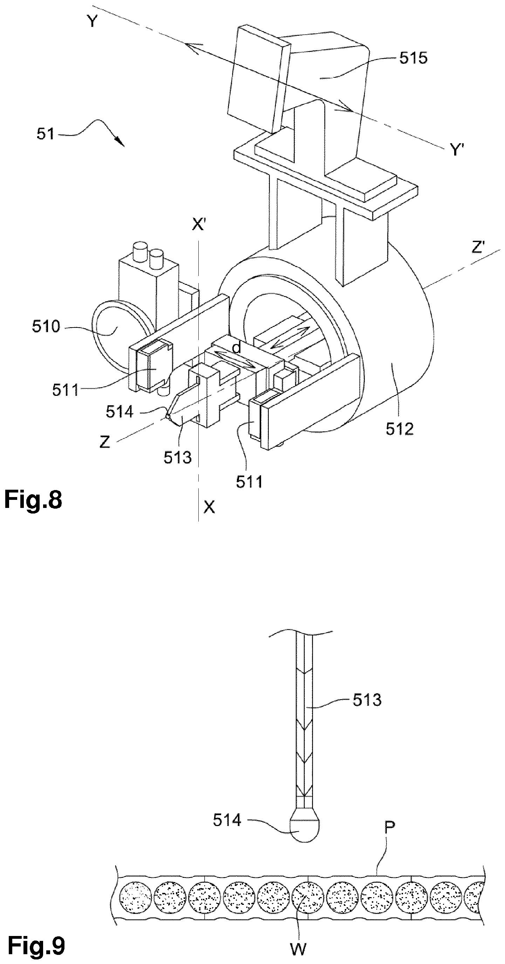

Les figures 8 et 9 permettent de visualiser plus en détail la tête de coupe 51 montée par l'intermédiaire d'un bras de support 515 sur un chariot (non visible) coulissant sur le rail transversal 50. La coupe de la nappe s'effectue en déplaçant la nappe selon la direction longitudinale XX' et en déplaçant le chariot supportant la tête de coupe 51 selon la direction transversale YY'. Le rapport du déplacement transversal de la tête de coupe 51 et du déplacement longitudinal de la nappe P est égal à la tangente de l'angle formé par les fils de la nappe avec la direction longitudinale.

La tête de coupe 51 comprend un corps 512 supportant une lame de coupe 513. Un dispositif motorisé (non visible) permet d'actionner la lame de coupe selon la direction ZZ' pour faire pénétrer la lame dans l'entrefil formé par la ligne de coupe L.

Pour faciliter l'introduction de la lame de coupe 513 et éviter la détérioration des fils de renfort W lors de la pénétration selon l'axe ZZ' de la lame dans la nappe, la pointe de la lame 513 est munie d'un élément sphérique 514 permettant de guider la lame entre deux fils de renfort W, comme cela est illustré à la figure 9. Le diamètre de l'élément sphérique est utilement de l'ordre de 4mm. Un dispositif de chauffage permet de maintenir la lame de coupe 513 à une température régulée de l'ordre de 60°C.

Une enclume (non représentée) peut être approchée du dos de la nappe au droit du point de pénétration de la lame de coupe, pour faciliter la pénétration de la lame dans la nappe.

La position angulaire de la lame de coupe 513 autour de l'axe ZZ' peut également être ajustée pour correspondre sensiblement à l'angle formé par les fils de la nappe P avec la direction longitudinale.

La lame de coupe 514 comporte deux fils de coupe tranchants opposés l'un à l'autre de manière à autoriser la découpe de la nappe quel que soit le sens de circulation de la lame de coupe dans l'entrefil.

Enfin, la lame de coupe 513 est libre de se déplacer dans la direction transversale YY' par rapport au corps 512. Ce déplacement s'effectue entre deux limites distantes d'une valeur d. Un capteur 516 tel qu'un laser permet d'évaluer la position latérale de la lame à l'intérieur de ce débattement dont la valeur est de l'ordre du centimètre. On observe en effet que l'angle formé par les fils le long de la ligne de coupe n'est pas rigoureusement constant et que la lame peut être déportée latéralement dans un sens ou dans un autre. Un ressort de rappel (non visible), faiblement taré, permet de ramener la lame au point zéro lorsque la lame est sortie de l'entrefil.

Lorsque l'écart transversal imposé par les fils dépasse la valeur du débattement libre, le capteur 516 envoie un signal à l'unité de commande centralisée qui pilote le déplacement du chariot circulant sur le rail 50 et supportant la tête de coupe pour replacer la lame à l'intérieur des limites dans lesquelles le débattement reste libre.

Des cellules 511 placées des deux côtés du corps 512 de la tête de coupe permettent d'évaluer la position de la lame par rapport à la première lisière L₁ ou à la deuxième lisière L₂. La lumière réfléchie par le réflecteur 52 est détecté par les cellules 511, et un signal est envoyé à l'unité de commande centralisée.

Une caméra 510 placée sur le corps 512, également reliée à l'unité de commande centralisée, permet de détecter, comme on le verra par la suite, la position d'une marque particulière M réalisée sur la surface de la nappe.

Après avoir décrit les éléments de dispositif nécessaires à la mise en œuvre de l'invention on s'attachera dans ce qui suit à décrire les principales étapes du procédé formant l'objet proprement dit de l'invention.

Au cours d'une première **étape A,** on déroule la bande pour présenter le front avant sur la forme cylindrique 1. L'opérateur fait adhérer la pointe du front avant PF sur la forme cylindrique 1 et lance la mise en rotation de la forme cylindrique selon une première direction circonférentielle, pour déposer la nappe sur la forme cylindrique jusqu'à ce que le front avant PF réalise sensiblement un tour complet.

Au cours de cette étape, comme on l'a vu ci-dessus, les moyens de guidage et de centrage permettent de positionner la nappe de manière précise tout en assurant une tension de pose régulière.

L'étape B suivante commence lorsque le front avant PF se présente à nouveau devant l'opérateur. Au cours de cette **étape B** on repère sur la nappe un point de pénétration sur une ligne de coupe L pour former un front arrière PR destiné à être mis en joint avec le front avant PF.

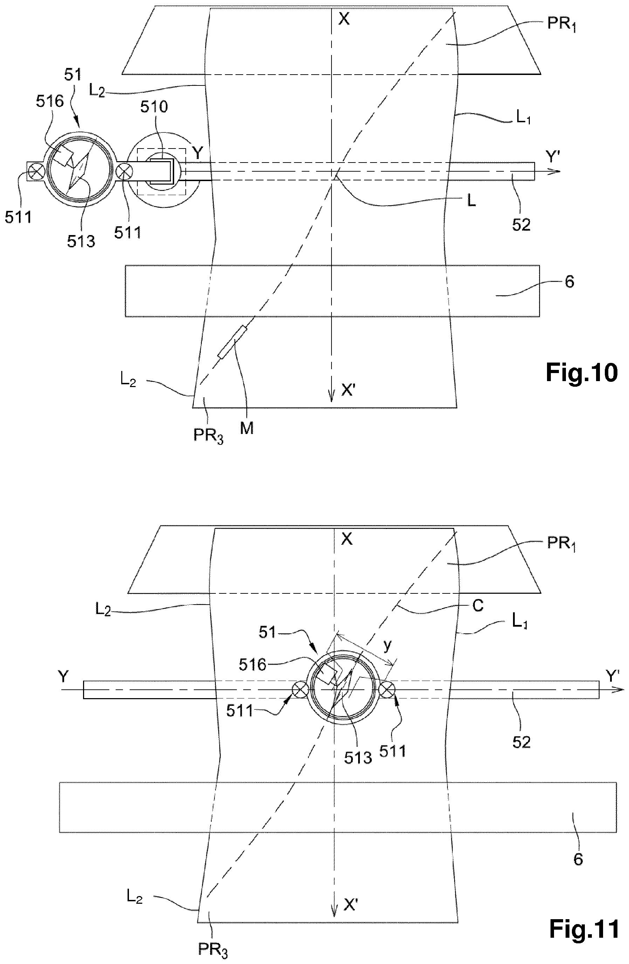

Une première alternative consiste à laisser l'opérateur estimer la position de la ligne de coupe L. Une fois la ligne de coupe localisée, l'opérateur réalise une marque visible M sur le point de pénétration au niveau duquel il souhaite faire pénétrer la lame de coupe dans la bande, comme cela est illustré à la figure 10. En règle générale l'opérateur s'arrange pour positionner la marque M au plus proche de la lisière L₂ située du côté de la nappe destinée à former le talon du front arrière PR₃.

La caméra 510 est alors activée et l'unité de commande centralisée pilote le positionnement de la tête de coupe 51 et l'avance ou le recul de la nappe pour que la lame de coupe 513 se positionne juste au droit de la marque M. La forme cylindrique est alors immobilisée.

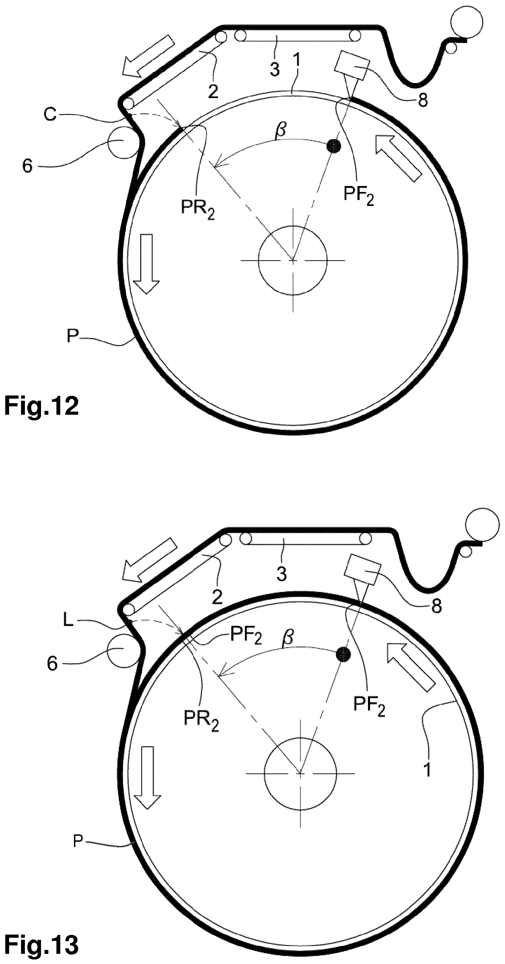

Une seconde alternative consiste à activer un dispositif 8 de détection automatique du front avant illustré aux figures 12 et 13.

Ce dispositif est disposé au-dessus de la forme cylindrique en amont du point de rencontre entre la nappe P et la surface de la forme cylindrique 1. Pour plus de précision, le dispositif 8 est disposé au niveau de la ligne équatoriale de la forme cylindrique sur laquelle sont centrés la nappe et les centres PF₂ et PR₂ des fronts avant et arrière.

Le dispositif de détection de front 8 comprend un capteur sensible à la variation de hauteur engendrée sur la forme cylindrique 1 par le passage dudit front avant PF au droit dudit dispositif de détection de front 8. A cet effet, on peut faire l'usage d'un laser télémétrique ou encore d'un frotteur mécanique. Une fois le passage du front détecté, comme cela est illustré à la figure 12, la forme cylindrique effectue automatiquement une rotation angulaire d'un angle β prédéterminé de manière à positionner le front avant au droit d'une ligne imaginaire correspondant à la ligne de mise en joint du front avant PF et du front arrière PR comme cela est illustré à la figure 13.

La rotation de la forme cylindrique 1 est alors interrompue.

Lorsque la forme cylindrique 1 est formée par l'assemblage de secteurs séparées par des espaces vides, le dispositif de détection 8 de front peut générer des détections à tort. On s'arrange alors, au cours de l'étape A, pour positionner la forme cylindrique de sorte que le front avant au niveau de la partie centrale soit disposé sur un secteur prédéterminé. L'azimut de ce secteur peut utilement faire partie de la recette enregistrée dans l'unité de commande centralisée.

L'étape C au cours de laquelle on fait pénétrer la lame de coupe dans la nappe P peut alors s'exécuter.

Selon la première alternative, la lame de coupe 513, pénètre directement dans la marque M apposée par l'opérateur et préalablement repérée par la caméra 510.

Selon la seconde alternative, on amène la lame de coupe à une position transversale prédéterminée de sorte que la lame de coupe 513 pénètre dans la nappe P en un point situé sur la ligne de coupe L. En rabattant la partie arrière de la nappe sur la forme cylindrique 1, le front avant PF et le front arrière PR peuvent alors être mis en joint, comme cela est illustré à la figure 13. Préférentiellement, la lame de coupe 513 et le capteur 8 sont placés sur le même plan équatorial.

On observera ici que l'étape C peut se dérouler sans l'intervention de l'opérateur.

L'opération de coupe proprement dite permettant de détacher la nappe P de la bande s'exécute alors de manière automatique de la façon suivante.

Au cours d'une **étape D**, on fait tourner la forme cylindrique selon la seconde direction circonférentielle, opposée à la première direction circonférentielle, en déplaçant la lame de coupe 513 entre les deux fils de l'entrefil selon une première direction transversale jusqu'à ce que la lame de coupe soit disposée à une distance prédéterminée et non nulle de la première lisière L₁. Dès qu'une cellule 511 détecte la présence de la lisière, l'unité de commande centralisée arrête la rotation de la forme cylindrique. Cette distance non nulle est de l'ordre de 1 cm à 2 cm et permet d'éviter que la lame de coupe ne sorte de l'entrefil dans laquelle elle est maintenue.

Au cours de **l'étape E**, tout en maintenant la lame de coupe 513 dans l'entrefil, on fait tourner la forme cylindrique 1 selon la première direction circonférentielle, en déplaçant la lame de coupe selon une seconde direction transversale, opposée à la première direction transversale, jusqu'à ce que la lame de coupe 513 débouche au niveau de la seconde lisière L2. La lame de coupe 513 peut être relevée, et la tête de coupe est ramenée à une position transversale d'attente.

On observera que la coupe de la nappe se fait en allant du talon PR₃ du front arrière vers la pointe PR₁ du front arrière. Ce sens de coupe préféré permet de réduire la déformation de la nappe et de favoriser la mise en joint des deux fronts.

Pendant cette étape E, l'intervention de l'opérateur n'est pas nécessaire.

A **l'étape F**, on fait tourner la forme cylindrique selon la seconde direction circonférentielle et on fait adhérer le front arrière PR sur la forme cylindrique 1 en mettant bout à bout le front arrière PR et le front avant PF. Cette opération est réalisée par l'opérateur qui ajuste la mise en joint des deux fronts. La bande de renfort est progressivement rembobinée sur le dispositif d'enroulage 7. Toutefois, les efforts liés au décollement du produit, qui sont nécessaires pour assurer la mise en joint des fronts, sont grandement allégés par le mouvement des différents tapis d'entrainement 2, 3 et 4 qui entrainent la bande de renfort P vers le dispositif d'enroulage 7 sans qu'il soit nécessaire de faire intervenir l'opérateur.

Enfin, à **l'étape G,** à l'aide d'un outillage manuel, l'opérateur, achève la séparation de la nappe de renfort du reste de la bande en coupant, à l'aide d'un outil manuel, le pont de gomme situé au niveau de la première lisière L₁ sur les quelques centimètres qui avait été laissés en l'état à l'issue de l'étape D, et détache le front arrière PR pour achever la mise en joint du front arrière PR et du front avant PF.

Pour parfaire la pose de la nappe, il est alors possible, lorsque cela est nécessaire, d'activer des moyens de rouletage permettant de favoriser l'adhésion de la nappe sur la nappe posée précédemment.

Ainsi, tout en mettant en œuvre des dispositifs pour la plupart connus en soi, le procédé selon l'invention permet d'améliorer la précision de pose d'un produit tel qu'une nappe de renfort sommet et de soustraire l'opérateur des efforts physiques liés aux opérations d'alignement, de coupe et de positionnement de la nappe, en particulier lors de la pose de produits destinés à la fabrication de pneumatique génie civil de grande dimension.

### NOMENCLATURE

1 Forme cylindrique.
10 Moteur.
2 Tapis de pose.
21 Rouleau d'entrainement amont du tapis de pose.
3 Tapis de centrage.
30 Axe de rotation du tapis d'alignement.
31 Caméras de visualisation des lisières disposées entre le tapis de centrage et le tapis de pose.
32 Vérin d'actionnement du tapis de centrage.
4 Tapis d'alimentation.
5 Dispositif de coupe.
50 Rail transversal de circulation de la tête de coupe.
51 Tête de coupe.
510 Caméra de repérage de la marque disposée sur le corps de la tête de coupe.
511 Cellules de repérage des lisières disposées sur le corps de la tête de coupe.
512 Corps du dispositif de coupe.
513 Lame de coupe.
514 Pointe sphérique.
515 Bras support.
516 Capteur laser/Moyen d'évaluation de la position transversale de la lame de coupe par rapport au dispositif de coupe.
52 Réflecteur.
6 Rouleau dynamométrique de régulation de tension de pose.
7 Dispositif d'enroulage et de déroulage motorisé.
8 Dispositif de détection du front avant.
a Angle des fils avec la direction longitudinale.
P Nappe de fils.
PF Front avant.
PF₁ Pointe front avant.
PF₂ Centre front avant.
PF₃ Talon front avant.
PR Front arrière.
PR₁ Pointe front arrière.
PR₂ Centre front arrière.
PR₃ Talon front arrière.
W Fils de renfort.
L₁ Première lisière.
L₂ Deuxième lisière.
L Ligne de coupe.
M Marque/point de pénétration.
XX' Axe longitudinal/direction circonférentielle.
YY' Axe transversal.
ZZ' Axe perpendiculaire au plan de la nappe/axe radial.
d Débattement libre dans des limites prédéterminées de la lame de coupe dans la direction transversale.
r Rayon du rouleau d'entrainement amont du tapis de pose.

## Revendications

1. Procédé de pose sur une forme cylindrique (1) animée en rotation d'une nappe de renfort (P) composée de fils (W) enrobés dans un mélange de caoutchouc, parallèles entre eux et faisant un angle donné (a) avec la direction longitudinale (XX') de la nappe, comprenant les étapes au cours desquelles :
- Etape A : on fait adhérer un front avant (PF) de la nappe de renfort (P) sur la forme cylindrique (1) et, en faisant tourner la forme cylindrique (1) selon une première direction circonférentielle, on dépose la nappe de renfort (P) sur la forme cylindrique (1) jusqu'à ce que le front avant (PF) réalise un tour complet,
- Etape B : on repère sur la nappe (P) un point de pénétration sur une ligne de coupe (L) pour former un front arrière (PR) destiné à être mis en joint avec le front avant (PF),
- Etape C : on fait pénétrer une lame de coupe (513) équipant une tête de coupe (51) pilotée en translation selon un axe transversal (YY'), entre deux fils, placés sur la ligne de coupe (L) au niveau dudit point de pénétration et définissant un entrefil,
- Etape D : on fait tourner la forme cylindrique (1) selon une seconde direction circonférentielle, opposée à la première direction circonférentielle, en déplaçant la tête de coupe (51) selon une première direction transversale jusqu'à ce que la lame de coupe (513) soit disposée à une distance prédéterminée et non nulle d'une première lisière (L₁) et, sans ressortir la lame de coupe (513) de l'entrefil,
- Etape E : on fait tourner la forme cylindrique (1) selon la première direction circonférentielle, en déplaçant la tête de coupe (51) selon une seconde direction transversale, opposée à la première direction transversale jusqu'à ce que la lame de coupe (513) débouche au niveau d'une seconde lisière (L₂),
- Etape F : on fait tourner la forme cylindrique (1) selon la seconde direction circonférentielle et on fait adhérer le front arrière (PR) sur la forme cylindrique (1) en mettant bout à bout le front arrière (PR) et le front avant (PF),
- Etape G : on détache le front arrière (PR) de la nappe au niveau de la première lisière (L₁) et on achève la mise en joint du front arrière (PR) et du front avant (PF).

2. Procédé selon la revendication 1 dans lequel, au cours de l'étape B, un opérateur détermine le point de pénétration et y appose une marque visible (M) et, au cours de l'étape C, à l'aide d'une caméra (510) disposée sur la tête de coupe (51) on détecte la marque (M) disposée sur le point de pénétration, et on pilote la rotation de la forme cylindrique (1) et le déplacement transversal de la tête de coupe (51) pour amener ladite lame de coupe (513) au droit dudit point de pénétration (M).

3. Procédé selon la revendication 1, dans lequel, au cours de l'étape B, on détecte le front avant (PF) à l'aide d'un dispositif de détection de front (8) sensible à la variation de hauteur engendrée sur la forme cylindrique (1) par le passage dudit front avant (PF) au droit dudit dispositif de détection de front (8), et on amène la forme cylindrique (1) et la lame de coupe (513) à des positions angulaires et transversales prédéterminées de sorte que, au cours de l'étape C, la lame de coupe pénètre entre deux fils (W) au niveau du point de pénétration situé sur la ligne de coupe (L).

4. Procédé selon la revendication 3 dans lequel on aligne la position transversale de la lame de coupe (513) sur la position du dispositif de détection de front (8).

5. Procédé selon la revendication 4 dans lequel le dispositif de détection de front (8) est disposé transversalement à équidistance de la première (L₁) et de la seconde (L₂) lisière.

6. Procédé selon l'une quelconque des revendications précédentes dans lequel, au cours des étapes D et E, on régule le déplacement transversal de la tête de coupe (51) en fonction du déplacement longitudinal du tapis de pose (2) et de l'angle (a) formé par les fils avec la direction longitudinale (XX').

7. Procédé selon la revendication 6, dans lequel la lame de coupe (513) est mobile librement selon une direction transversale par rapport à la tête de coupe (51).

8. Procédé selon la revendication 6 et la revendication 7, dans lequel, à l'aide d'un moyen d'évaluation de la position transversale de la lame de coupe par rapport à la tête de coupe (516), on ajuste le déplacement transversal de la tête de coupe (51) de sorte que la position transversale de la lame de coupe (513) par rapport à la tête de coupe (51) reste dans des limites prédéterminées (d).

9. Procédé selon l'une quelconque des revendications précédentes, dans lequel, au cours des étapes A, D, E et F, on fait circuler la nappe de renfort (P) successivement sur un tapis de centrage (3) et sur un tapis de pose (2) disposés en amont de la forme cylindrique (1).

10. Procédé selon la revendication 9 dans lequel le tapis de centrage (3) est mobile en rotation autour d'un axe (XX') perpendiculaire au plan du tapis de centrage sur lequel circule la nappe et dans lequel, à l'aide de caméras (31) détectant la position des lisières (Li, L₂) de la nappe, on régule la position angulaire du tapis de centrage de manière à aligner la nappe (P) sur une position transversale prédéfinie.

11. Procédé selon la revendication 10, dans lequel les fils (W) de la nappe sont des fils métalliques, et dans lequel le tapis de centrage (3) et le tapis de pose (2) sont munis d'un dispositif magnétique pour faire adhérer la nappe (P) sur lesdits tapis (2, 3).

12. Procédé selon l'une quelconque des revendications 9 à 11, dans lequel les plans du tapis de pose (2) et du tapis de centrage (3) sur lesquels circule la nappe (P) font entre eux un angle non nul (α) et dans lequel une force motrice fournie à la nappe par le tapis de centrage (3) est inférieure ou égale à la moitié d'une force motrice fournie à la nappe par le tapis de pose (2).

13. Procédé selon l'une quelconque des revendications 9 à 12, dans lequel on ajuste la vitesse longitudinale du tapis de pose (2) et du tapis de centrage (3), par rapport à la vitesse de rotation de la forme cylindrique (1) de sorte que la tension de pose de la nappe sur la forme cylindrique (1) est égale à une valeur prédéterminée.

14. Procédé selon l'une quelconque des revendications précédentes, dans lequel, à l'étape G, on détache le front arrière (PR) de la nappe à l'aide d'un outillage manuel.

15. Procédé selon l'une quelconque des revendications 1 à 14, dans lequel la forme cylindrique (1) est formée de secteurs mobiles radialement ou dans lequel la forme cylindrique (1) est le sommet d'une ébauche torique de pneumatique.

## Patentansprüche

1. Verfahren zum Aufbringen einer Verstärkungsbahn (P), die aus Fäden (W) gebildet ist, die in eine Gummimischung eingebettet sind, parallel zueinander verlaufen und einen gegebenen Winkel (a) mit der Längsrichtung (XX') der Bahn bilden, auf eine sich drehende zylindrische Form (1), umfassend die folgenden Schritte:
- Schritt A: eine vordere Flanke (PF) der Verstärkungsbahn (P) wird auf der zylindrischen Form (1) angehaftet, und durch Drehen der zylindrischen Form (1) in einer ersten Umfangsrichtung wird die Verstärkungsbahn (P) auf die zylindrische Form (1) aufgebracht, bis die vordere Flanke (PF) eine vollständige Umdrehung vollzogen hat,
- Schritt B: auf der Bahn (P) wird auf einer Schnittlinie (L) ein Durchdringungspunkt markiert, um eine hintere Flanke (PR) auszubilden, die mit der vorderen Flanke (PF) verbunden werden soll,
- Schritt C: ein Schneidmesser (513), das an einem entlang einer Querachse (YY') translatorisch gesteuerten Schneidkopf (51) angebracht ist, wird zwischen zwei Fäden, die auf der Schnittlinie (L) im Bereich des Durchdringungspunkts angeordnet sind und einen Fadenzwischenbereich definieren, eingeführt,
- Schritt D: die zylindrische Form (1) wird in einer zur ersten Umfangsrichtung entgegengesetzten zweiten Umfangsrichtung, gedreht, indem der Schneidkopf (51) in einer ersten Querrichtung bewegt wird, bis das Schneidmesser (513) in einem vorbestimmten und von Null verschiedenen Abstand zu einer ersten Kante (L₁) angeordnet ist, und, ohne das Schneidmesser (513) aus dem Fadenzwischenbereich zu entnehmen,
- Schritt E: die zylindrische Form (1) wird in der ersten Umfangsrichtung gedreht, indem der Schneidkopf (51) in einer zur ersten Querrichtung entgegengesetzten zweiten Querrichtung bewegt wird, bis das Schneidmesser (513) an eine zweite Kante (L₂) gelangt,
- Schritt F: die zylindrische Form (1) wird in der zweiten Umfangsrichtung gedreht und die hintere Flanke (PR) wird an der zylindrischen Form (1) angehaftet, wobei die hintere Flanke (PR) und die vordere Flanke (PF) aneinanderstoßen,
- Schritt G: die hintere Flanke (PR) wird an der ersten Kante (L₁) von der Bahn gelöst und die Verbindung der hinteren Flanke (PR) mit der vorderen Flanke (PF) wird abgeschlossen.

2. Verfahren nach Anspruch 1, wobei bei Schritt B eine Bedienperson den Durchdringungspunkt bestimmt und eine sichtbare Markierung (M) darauf anbringt und wobei bei Schritt C mit Hilfe einer am Schneidkopf (51) angeordneten Kamera (510) die auf dem Durchdringungspunkt angebrachte Markierung (M) erfasst wird und wobei die Drehung der zylindrischen Form (1) und die Querbewegung des Schneidkopfs (51) so gesteuert werden, dass das Schneidmesser (513) und der Durchdringungspunkt (M) auf gleiche Höhe gebracht werden.

3. Verfahren nach Anspruch 1, wobei bei Schritt B die vordere Flanke (PF) mit Hilfe einer Flankenerfassungsvorrichtung (8) erfasst wird, die auf die Höhenveränderung anspricht, die auf der zylindrischen Form (1) durch den Durchgang der vorderen Flanke (PF) im Bereich der Flankenerfassungsvorrichtung (8) erzeugt wird, und wobei die zylindrische Form (1) und das Schneidmesser (513) in vorbestimmte Winkel- und Querpositionen gebracht werden, so dass bei Schritt C das Schneidmesser zwischen zwei Fäden (W) an dem auf der Schnittlinie (L) befindlichen Durchdringungspunkt eindringt.

4. Verfahren nach Anspruch 3, wobei die Querposition des Schneidmessers (513) mit der Position der Flankenerfassungsvorrichtung (8) ausgerichtet wird.

5. Verfahren nach Anspruch 4, wobei die Flankenerfassungsvorrichtung (8) in Querrichtung äquidistant zur ersten (L₁) und zur zweiten Kante (L₂) angeordnet ist.

6. Verfahren nach einem der vorangehenden Ansprüche, wobei bei Schritt D und E die Querbewegung des Schneidkopfs (51) in Abhängigkeit von der Längsbewegung des Aufbringbands (2) und des durch die Fäden mit der Längsrichtung (XX') ausgebildeten Winkels (a) geregelt wird.

7. Verfahren nach Anspruch 6, wobei das Schneidmesser (513) in einer Querrichtung relativ zum Schneidkopf (51) frei beweglich ist.

8. Verfahren nach Anspruch 6 und Anspruch 7, wobei die Querbewegung des Schneidkopfs (51) mit Hilfe eines Mittels zur Beurteilung der Querposition des Schneidmessers relativ zum Schneidkopf (516) so eingestellt wird, dass die Querposition des Schneidmessers (513) relativ zum Schneidkopf (51) innerhalb vorbestimmter Grenzen (d) bleibt.

9. Verfahren nach einem der vorangehenden Ansprüche, wobei bei Schritt A, D, E und F die Verstärkungsbahn (P) nacheinander auf einem Zentrierband (3) und auf einem Aufbringband (2), die vor der zylindrischen Form (1) angeordnet sind, zirkulieren gelassen wird.

10. Verfahren nach Anspruch 9, wobei das Zentrierband (3) um eine Achse (XX') drehbar ist, die senkrecht zur Ebene des Zentrierbands ist, auf der die Bahn zirkuliert, und wobei mit Hilfe von Kameras (31), die die Position der Kanten (L₁, L₂) der Bahn erfassen, die Winkelposition des Zentrierbands so geregelt wird, dass die Bahn (P) in einer vordefinierten Querposition ausgerichtet ist.

11. Verfahren nach Anspruch 10, wobei die Fäden (W) der Bahn Metallfäden sind und wobei das Zentrierband (3) und das Aufbringband (2) mit einer magnetischen Vorrichtung versehen sind, um die Bahn (P) an den Bändern anhaften zu lassen (2, 3).

12. Verfahren nach einem der Ansprüche 9 bis 11, wobei die Ebenen des Aufbringbands (2) und des Zentrierbands (3), auf denen die Bahn (P) zirkuliert, miteinander einen von Null verschiedenen Winkel (α) ausbilden und wobei eine der Bahn durch das Zentrierband (3) zugeführte Antriebskraft kleiner als oder so groß wie die Hälfte einer der Bahn durch das Aufbringband (2) zugeführten Antriebskraft ist.

13. Verfahren nach einem der Ansprüche 9 bis 12, wobei die Längsgeschwindigkeit des Aufbringbands (2) und des Zentrierbands (3) relativ zur Drehgeschwindigkeit der zylindrischen Form (1) so eingestellt wird, dass die Spannung beim Aufbringen der Bahn auf die zylindrische Form (1) einem vorbestimmten Wert entspricht.

14. Verfahren nach einem der vorangehenden Ansprüche, wobei bei Schritt G die hintere Flanke (PR) der Bahn mit Hilfe eines Handwerkzeugs gelöst wird.

15. Verfahren nach einem der Ansprüche 1 bis 14, wobei die zylindrische Form (1) aus radial beweglichen Sektoren ausgebildet ist oder wobei die zylindrische Form (1) der Scheitel eines torischen Reifenrohlings ist.

## Claims

1. Method for laying, on a rotationally driven cylindrical form (1), a reinforcing ply (P) composed of wires (W) coated in a rubber mixture, parallel to one another and forming a given angle (a) with the longitudinal direction (XX') of the ply, comprising steps during which:
- Step A: a front edge (PF) of the reinforcing ply (P) is made to adhere to the cylindrical form (1), and, by rotating the cylindrical form (1) in a first circumferential direction, the reinforcing ply (P) is deposited on the cylindrical form (1) until the front edge (PF) performs a complete revolution,
- Step B: a point of penetration on a cutting line (L) is marked on the ply (P) to form a rear edge (PR) intended to be joined with the front edge (PF),
- Step C: a cutting blade (513) with which a cutting head (51) that is translationally driven along a transverse axis (YY') is equipped, is made to penetrate, between two wires that are placed on the cutting line (L) at said point of penetration and that define a wire gap,
- Step D: the cylindrical form (1) is made to rotate in a second circumferential direction, opposite the first circumferential direction, while displacing the cutting head (51) in a first transverse direction until the cutting blade (513) is disposed at a predetermined and non-zero distance from a first selvedge (L₁) and, without retracting the cutting blade (513) from the wire gap,
- Step E: the cylindrical form (1) is made to rotate in the first circumferential direction, while displacing the cutting head (51) in a second transverse direction, opposite the first transverse direction, until the cutting blade (513) emerges at a second selvedge (L₂),
- Step F: the cylindrical form (1) is made to rotate in the second circumferential direction and the rear edge (PR) is made to adhere on the cylindrical form (1) by abutting the rear edge (PR) and the front edge (PF),
- Step G: the rear edge (PR) of the ply is detached at the first selvedge (L₁) and the joining of the rear edge (PR) and of the front edge (PF) is completed.

2. Method according to Claim 1, wherein, during the step B, an operator determines the point of penetration and adds a visible mark (M) at that point and wherein, during the step C, using a camera (510) disposed on the cutting head (51), the mark (M) disposed on the point of penetration is detected, and the rotation of the cylindrical form (1) and the transverse displacement of the cutting head (51) are controlled to bring said cutting blade (513) in line with said point of penetration (M).

3. Method according to Claim 1, wherein, during the step B, the front edge (PF) is detected using an edge detection device (8) sensitive to the height variation created on the cylindrical form (1) by the passage of said front edge (PF) in line with said edge detection device (8), and the cylindrical form (1) and the cutting blade (513) are brought to predetermined angular and transverse positions so that, during the step C, the cutting blade penetrates between two wires (W) at the point of penetration situated on the cutting line (L).

4. Method according to Claim 3, wherein the transverse position of the cutting blade (513) is aligned with the position of the edge detection device (8).

5. Method according to Claim 4, wherein the edge detection device (8) is disposed transversely equidistant from the first selvedge (L₁) and from the second selvedge (L₂).

6. Method according to any one of the preceding claims, wherein, during the steps D and E, the transverse displacement of the cutting head (51) is regulated as a function of the longitudinal displacement of the laying mat (2) and of the angle (a) formed by the wires with the longitudinal direction (XX').

7. Method according to Claim 6, wherein the cutting blade (513) is freely mobile in a transverse direction relative to the cutting head (51).

8. Method according to Claim 6 and Claim 7, wherein, using a means for evaluating the transverse position of the cutting blade relative to the cutting head (516), the transverse displacement of the cutting head (51) is adjusted so that the transverse position of the cutting blade (513) relative to the cutting head (51) remains within predetermined limits (d).

9. Method according to any one of the preceding claims, wherein, during the steps A, D, E and F, the reinforcing ply (P) is made to circulate in succession on a centring mat (3) and on a laying mat (2) which are disposed upstream of the cylindrical form (1).

10. Method according to Claim 9, wherein the centring mat (3) is rotationally mobile about an axis (XX') at right angles to the plane of the centring mat on which the ply circulates and in which, using cameras (31) detecting the position of the selvedges (Li, L₂) of the ply, the angular position of the centring mat is regulated so as to align the ply (P) with a predefined transverse position.

11. Method according to Claim 10, wherein the wires (W) of the ply are metal wires, and wherein the centring mat (3) and the laying mat (2) are provided with a magnetic device to make the ply (P) adhere to said mats (2, 3).

12. Method according to any one of Claims 9 to 11, wherein the planes of the laying mat (2) and of the centring mat (3), on which the ply (P) circulates, form between them a non-zero angle (a) and wherein a motive force imparted on the ply by the centring mat (3) is less than or equal to half a motive force imparted on the ply by the laying mat (2).

13. Method according to any one of Claims 9 to 12, wherein the longitudinal speed of the laying mat (2) and of the centring mat (3), relative to the speed of rotation of the cylindrical form (1), is adjusted so that the tension of laying of the ply on the cylindrical form (1) is equal to a predetermined value.

14. Method according to any one of the preceding claims, wherein, in the step G, the rear edge (PR) of the ply is detached using manual tools.

15. Method according to any one of Claims 1 to 14, wherein the cylindrical form (1) is formed by radially mobile segments or wherein the cylindrical form (1) is the crown of a toroidal tyre blank.
